(19) **Europäisches Patentamt**
**European Patent Office**
**Office européen des brevets**

(11) **EP 1 977 602 B1**

(12) **EUROPEAN PATENT SPECIFICATION**

(45) Date of publication and mention of the grant of the patent:
**13.03.2013 Bulletin 2013/11**

(51) Int Cl.:
**H04N 7/26** (2006.01)

(21) Application number: **06706903.9**

(22) Date of filing: **13.02.2006**

(86) International application number:
**PCT/EP2006/001292**

(87) International publication number:
**WO 2007/079781 (19.07.2007 Gazette 2007/29)**

(54) **PICTURE CODING USING ADAPTIVE COLOUR SPACE TRANSFORMATION**

BILDCODIERUNG UNTER VERWENDUNG EINER ADAPTIVEN FARBRAUMTRANSFORMATION

CODAGE D IMAGE EXPLOITANT UNE TRANSFORMATION ADAPTATIVE DE L ESPACE DES COULEURS

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.01.2006 PCT/EP2006/000286**

(43) Date of publication of application:
**08.10.2008 Bulletin 2008/41**

(73) Proprietor: **Fraunhofer-Gesellschaft zur Förderung der angewandten Forschung e.V.
80686 München (DE)**

(72) Inventors:
• **KAUFF, Peter
14197 Berlin (DE)**
• **MARPE, Detlev
12161 Berlin (DE)**
• **WIEGAND, Thomas
10719 Berlin (DE)**

(74) Representative: **Schenk, Markus
Schoppe, Zimmermann, Stöckeler & Zinkler
Patentanwälte
Postfach 246
82043 Pullach bei München (DE)**

(56) References cited:
**US-A- 4 974 171 US-A- 6 023 527**

• **D. MARPE, H. KIRCHHOFFER, V. GEORGE, C. FEHN, P. KAUFF, T. WIEGAND: "MB adaptive residual colour transform for 4:4:4 coding" ISO/IEC JTC1/SC29/WG11, ITU-T SG17 Q.6, 15 January 2007 (2007-01-15), pages 1-14, XP002433332 Thailand**
• **ISO/IEC JTC1/SC29 WG1 ET AL: "JPEG 2000 Part 1 020719 (Final Publication Draft)", JOINT PHOTOGRAPHIC EXPERT GROUP CONFERENCE, CROWBOROUGH : JPEG FORUM LTD, GB, 19 July 2002 (2002-07-19), XP017206142,**
• **ISO/IEC JTC1/SC29 WG1 ET AL: "JPEG 2000 Part 6 FDIS", JOINT PHOTOGRAPHIC EXPERT GROUP CONFERENCE, CROWBOROUGH : JPEG FORUM LTD, GB, 2 August 2002 (2002-08-02), XP017206163,**

**Description**

The present invention relates to picture coding and in particular to a concept allowing for a more efficient coding of picture content, i.e. producing encoded representations of pictures or picture streams having a better R/D-ratio.

Applications where pictures or picture streams have to be encoded efficiently are numerous. For example, still image compression is normally done by digital photo cameras to increase the number of pictures that can be stored on a storage medium of a given size. When it comes to transmission of image sequences or complete movies over a transmission medium offering only limited bandwidth, the use of an efficient codec (coder-decoder) that allows for a high compression of the content of the pictures becomes even more urgent. This is on the one hand due to the desired transmission over transport channels offering low bandwidth, such as the streaming of video content to mobile phones. On the other hand, the transmission of high-resolution video content is becoming more and more popular since displays capable of displaying such high resolution pictures are spreading more and more amongst consumers. One major trend is the upcoming broadcast of high-definition television (HDTV).

In general, two different coding approaches may be distinguished, the first aiming for an encoding without any loss of information and the second accepting a (moderate) loss of information and quality to achieve a significant reduction in file sizes. Although lossless encoding techniques exist for both still images and movie content, these techniques, often based on entropy coding, cannot achieve a file-size reduction being sufficient or acceptable for the desired application. Therefore, lossy compression is mostly preferred such as JPEG for still image compression and MPEG 2 for movie compression.

Generally, lossy compression has the problem of a decreased quality of the compressed pictures compared to the underlying original picture. Naturally, the quality of the picture becomes worse when the compression rate is increased, i.e. when the file size of the compressed picture is decreased. Therefore, one has to find a compromise between the desired quality of a compressed image and the file size acceptable for transmission or storage. Mostly, the decrease in file size and also the loss in information is achieved by quantization of parameters describing the picture properties and hence, the coarser the quantization the worse the quality and the smaller the compressed picture. The quality of the compressed picture is commonly estimated by a comparison of the compressed picture with the underlying original picture. This allows estimating a signal-to-noise ratio, wherein the noise is understood to be the noise introduced during the compression.

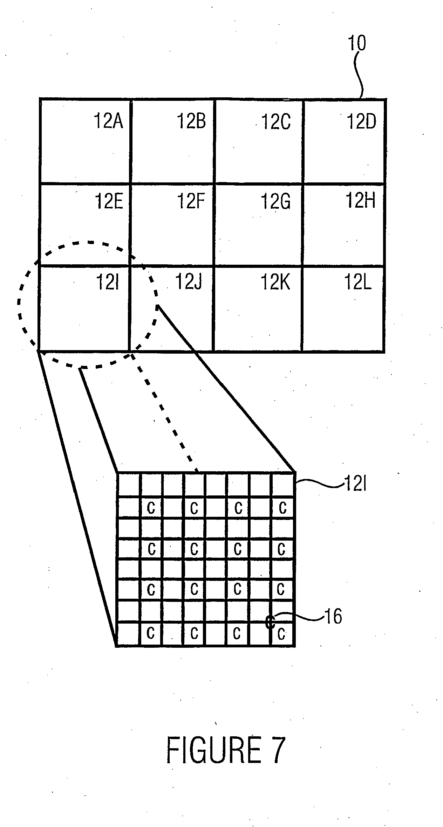

In current compression algorithms, a block-wise processing of images is widely used. The underlying basic idea is that for normal image content, a change of content, e.g. of color and brightness, of neighboring pixels is normally relatively small. Therefore, by using areas of neighboring pixels that are processed and compressed together, one should achieve rather high compression rates without significantly reducing the perceptual quality of the picture. Such a picture block is from here on also referred to as macro-block. Thus, in other words, the macro-blocks serve as a kind of sub-picture unit in coding. The block-subdivision is illustrated in Fig. 7, where a picture 10 is subdivided into 12 equally sized picture blocks 12A to 12L. The subdivision into 12 different picture blocks is to be understood as an example only.

As an example, a single picture block 12 I is magnified in Fig. 7, wherein the subdivision of the picture block 12 I into an 8 x 8 matrix shows the single pixel elements building the macro-block 12I. Also here, the formation of a picture block from 8 x 8 individual pixels is to be understood as an example only. To represent color within each individual pixel, each pixel is assigned three parameters holding different color information in a certain color space.

One simple approach of encoding a macro-block is to quantize the three parameters of each single pixel and to perform an entropy coding on the quantized parameters after the quantization. Since quantization significantly reduces the available parameter space for the entropy coding, quantization of the parameters can already reduce the amount of storage space or bits needed to describe one macro-block significantly.

However, in order to reduce the amount of syntax elements describing the picture content having high energy, the picture information within one macro-block is often described by transformation coefficients, generated by transforming the picture content within the macro-blocks into another representation (spectral domain). One example is to perform a discrete cosine transformation, eventually on a submacro-block level, and to use the transformation coefficients as the image information, which may then be quantized and which might also be entropy coded after quantization.

The transformation may, for example, be applied to the complete pixel information, i.e. three parameter values per pixel of the picture block 12I. Preferably, the transformation is performed separately for the three parameters/components.

For further reduction of file sizes and higher compression, one may also make use of a property of the human eye, which seems to put more weight on brightness information than on color information when judging the perceptual quality of an encoded picture. Therefore, one possibility to enhance the coding performance (with respect to quality and bit rate) is to reduce the number of color parameters with respect to the number of brightness parameters within a macro-block. That is, the information basis, on which a representation based of transformation coefficients is based, contains more information on brightness within the picture block than on color. Since there are numerous ways to describe a color by one single brightness-value and two color-values, the brightness-value shall be referred to as luma-value and the color -values shall be referred to as chroma-values, from here on.

One possible way of building such a picture block 121, suited to be transformed, is indicated in Fig. 7. The magnified picture block 12I has 8 x 8 individual pixels, each pixel normally described by one luma and two chroma values. Fig. 12I exemplifies a way to reduce the amount of chroma-information in that only the chroma information of specific pixels is used as the data set underlying the transformation. This is indicated by the letter C within each individual pixel that is part of the chroma-data set. On the contrary, the most important luma information of every individual pixel is used.

It is to be understood that the situation shown in the magnified macro-block 12I is an example only. It is also possible to further reduce the amount of chroma information. This could, for example, be achieved by omitting every second chroma information, that is for every eight luma values, one chroma value would be taken into account during the transformation. It would also be possible to not simply use the chroma-values of the pixels shown in Fig. 12A but to calculate an average chroma value from four neighboring pixels by averaging the chroma value of the pixels. Such a chroma value would then be assigned to a position within the macro-block that is lying in the center of the four underlying pixels, as indicated by chroma value 16 indicated in Fig. 7.

The encoding techniques described above can generally be used for both still images and moving pictures. For moving pictures, more sophisticated methods of encoding are used, involving motion estimation.

In case of macro-block-wise motion estimation, two (or more) pictures of a picture stream (the pictures do not necessarily have to directly follow each other) are located which show the same picture content in the two images. In the simplest case, the picture content within the macro-block of a current frame has not changed compared to the reference frame. However, the content of the macro-block may appear at a slightly different position in the reference frame. In this case it is sufficient to know the motion vector of the movement of the picture content during the transition from the reference picture to the macro-block of the current picture to reconstruct or predict the picture information of the picture block in the current picture, once the reference picture is completely known at the decoder side. Of course, normally there are slight changes within the picture block during the transition from the reference picture to the current picture. Due to this, the prediction error is also transmitted thereby allowing to reconstruct the change of picture content in the macro-block along with the motion vector, to allow for a complete reconstruction of the macro-block in the current picture. Codecs which use motion prediction with subsequent residual coding such as transformation and entropy coding are called hybrid video codecs.

According to state of the art techniques, predictive coding allows for an efficient representation of picture sequences. In predictive coding, first a value for a quantity to be coded is predicted and then only the difference of the really observed value to the predicted value is coded and transmitted. This will also yield a gain in bit rate, since having a reliable prediction, the difference parameters will on the average be smaller than the absolute parameters describing the picture within the macro-block. Hence, the symbol space on which a subsequent entropy coding (with or without preceding quantization) is based can be decreased, allowing for shorter code words and such for a reduction in bit-rate.

Although there have been quite some efforts undertaken to decrease the file size of compressed pictures or movies which are compressed using block-wise coding strategies without unacceptably decreasing the perceptual quality of the compressed content, the properties of the single picture blocks are still not exploited optimally with respect to different parametric representations of picture blocks.

US-patent application No. 4,974,171 proposes a data storage system for an electronic color printer which is capable of storing image portions within a page to be printed in different modes. Within the different modes, different representations for colors and intensities are used, such as to provide for a storage-saving description of the content of the page. Additional control data indicates, which representation is to be used, or which representation was used while creating the data describing the image.

It is the object of the present invention to provide a coding scheme allowing for a more efficient use of inherent properties of differing parametric representations of picture blocks in block-wise picture processing.

This object is achieved by an apparatus in accordance with claims 1 and 15, by a method in accordance with claims 18 and 19.

The present invention is based on the finding that pictures or a picture stream can be encoded highly efficient when a representation of pictures is chosen that has different picture blocks, with each picture block carrying picture information for picture areas smaller than the full area of the picture, and when the different picture blocks carry the picture information either in a first color-space representation or in a second color-space-representation. Since different color-space-representations have individual inherent properties with respect to their describing parameters, choosing an appropriate color-space-representation individually for the picture blocks results in an encoded representation of pictures that has a better quality at a given size or bit rate.

Preferred embodiments of the present invention are subsequently described by referring to the enclosed drawings, wherein:

Fig. 1    shows an embodiment of an inventive encoder;

Fig. 2    shows a bit rate versus quality graph of different color-space-representations;

Fig. 3    shows an example for a color-space-transformation emphasizing the inventive concept;

Fig. 4    shows an embodiment of an inventive encoder;

Fig. 4b    shows an example of a given context for context based coding;

Fig. 5    shows an example of an encoding concept for an embodiment of an inventive encoder;

Fig. 6    shows an example of an inventive bit stream; and

Fig. 7    shows block-wise decomposition of a picture for subsequent picture processing.

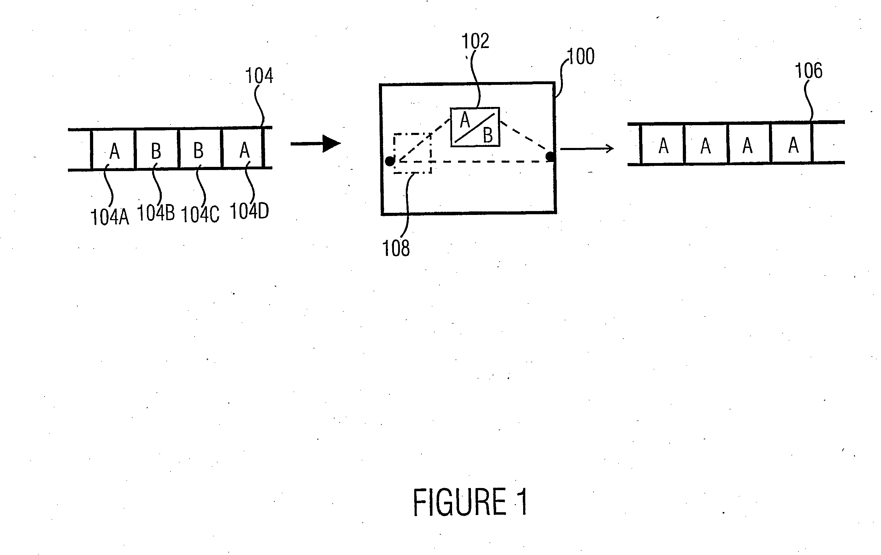

Fig. 1 shows an inventive decoder 100. The decoder 100 is having a color-space transformer 102 that is operative to transform a picture block from a first color-space-representation (A) to a second color-space-representation (B) and vice versa. The decoder is used within the reconstruction of a picture or a movie that is represented in a representation having a first picture block and a second picture block within pictures, wherein the picture blocks carry their picture information in a first color-space-representation (A) or in a second color-space-representation (B). The decoder 100 receives a bit stream 104 comprising several picture blocks 104A to 104D as an input, wherein the picture blocks 104A to 104D are included within the bit stream 104 in different color-space-representations A or B.

The color-space transformer 102 within the decoder 100 receives selected picture blocks to convert them from their original color-space-representation to a desired color-space-representation. As can be seen by the output bit stream 106 of the decoder 100, in the example given in Fig. 1, the color-space transformer is operative to transform the color-space-representation (B) of the picture blocks 104C and 104B to color-space-representation A such that after the decoding all picture blocks within the output stream 106 are represented in the color-space-representation A.

In a modification of Fig. 1, the decoder 100 can furthermore comprise a flag receiver 108 for receiving a transformation information transmitted within the bit stream that indicates whether a corresponding picture block has a color-space-representation that shall be transformed or not. Depending on the received transformation indication, the flag receiver 108 can either direct a picture block to the color-space transformer or directly to the output of the decoder (100).

Although in a preferred embodiment an inventive decoder receives a transformation indication signal with the bit stream, it is also possible to implement a decoder that recognizes by some recognization algorithm, whether a color-space transformation is required or not for a certain picture block. This could, for example, be derived from the picture block element representation itself.

In a further embodiment of the present invention an inventive decoder is operative to receive an additional activation flag that is activating or deactivating the color-space transformer for a number of consecutive frames (slices) or, more general, for larger groups of picture blocks.

It is a further preferred embodiment of the present invention to implement the inventive decoder in a video decoder which is operative to receive a bit stream signal that is comprising picture information of picture blocks that are encoded in a predictive coding scheme based on motion estimation of picture blocks.

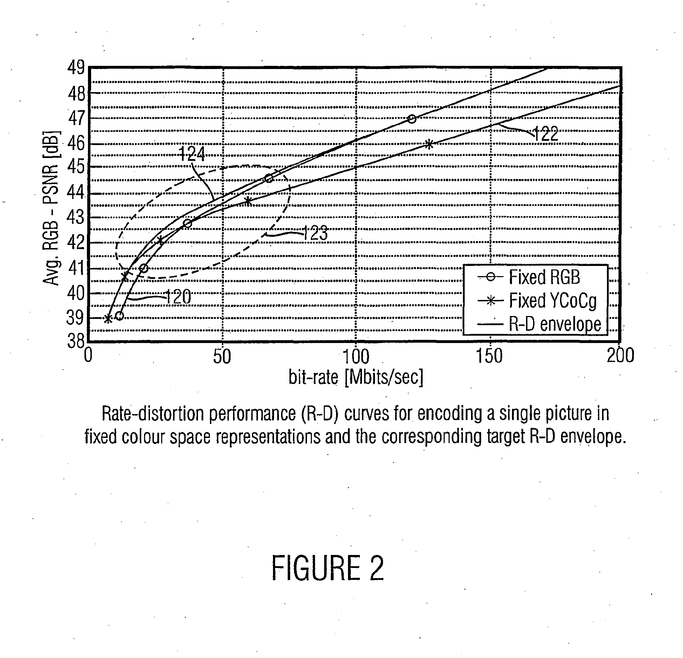

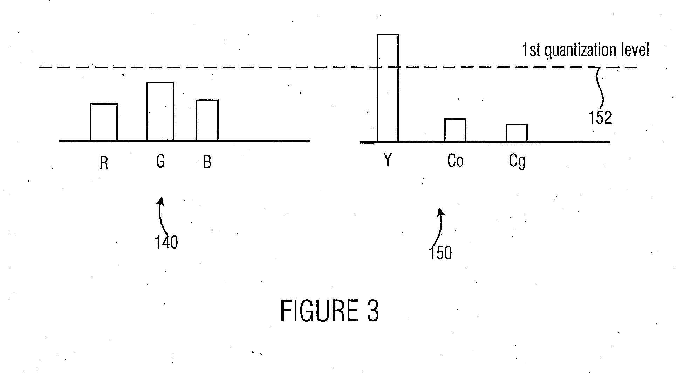

In such a predictive coding scheme, only the difference or residual (difference macro-blocks) between the motion-compensated prediction for the picture blocks and the actual content of the picture blocks is transmitted to increase the encoding efficiency. In one embodiment of the present invention, these differential macro-blocks are transmitted and decoded either in a primary (e.g. RGB) or in a secondary (e.g. YCoCg) color-space-representation. Therefore, the already rather compact information describing the differential picture blocks can be further decreased by a simple color transformation, which is computationally cheap. When it comes to coding of differential signals i.e. signals that are intended to have describing parameters of low values (i.e. small numbers), the effect of a color-space transformation may be extremely beneficial. This will shortly be motivated in the following description of Figs. 2 and 3.

In the context of residual signals, the present invention describes a technique for switching between a primary (e.g. RGB) and a secondary (e.g. YCoCg) color-space in order to adapt the color-space-representation of the prediction residual signal to the characteristics of the given video source and the specific coding conditions at hand. By using the inventive concept and techniques, an encoder chooses between two alternative color representations of the residual signal for each single macro-block (picture-block) in a rate-distortion optimal way. The encoder's choice may be signaled to a corresponding decoder by means of a macro-block-based flag. The inventive concept is applied to advanced video codecs such as H.264/MPEG4-AVC to reduce the demanded bit rate in high-quality coding scenarios of those advanced codecs. A rate-distortion optimal way may be understood such that, for example, a maximum bit rate for a bit stream is specified and an inventive encoder is operative to choose the color-space-representation of the residual signal that provides the best encoding quality at the specified bit rate. However, it is also possible to optimize the rate for a fixed quality or optimize a R/D ratio by use of some cost function.

The quality-bit rate dependency is, for a single sample frame, plotted in Fig. 2.

As can be seen, a specified maximum bit rate is given on the x-axis (in units of Mbits/Sec) and the corresponding image quality (signal-to-noise ratio in units of dB) is plotted on the y-axis. Fig. 2 shows two so called "rate-distortion performance curves" for encoding a single picture in two different fixed color-space-representations. The first curve 120 shows the rate dependency of the picture when RGB is chosen as color-space-representation and the second curve 122 shows the rate-distortion performance when YCoCg is chosen as color-space-representation. Fig. 2 shows the known effect that a single color-space-representation cannot be optimal (in a rate-distortion sense) for all different source picture characteristics. In general, the amount of correlation between the R, G and B channels is highly signal dependent and may even change within a given picture.

Fig. 2 shows the rate-distortion (R-D) curves for a typical intra-only coding scenario, where the color-space-representations have been fixed before encoding. Curve 120 represents the R-D performance obtained for the case of encoding in the original RGB domain, while encoding of the same source in the YCoCg color-space results in an R-D performance shown by Fig. 122. It may be noted that the distortion (D) in the plot has been measured as the average of the R, G, and B picture peak signal-to-noise ratio values, that is by comparing the original picture with the additional noise introduced by the encoding.

It may be noted that the curves in Fig. 2 represent averaged data for a complete picture. The effects discussed in the following paragraphs with respect to bit rate may be much more dominant when observed for single macro-blocks since averaging effects then do not occur and the difference of the quality achieved by using different color-space-representations on the single macro-block level may even be bigger.

As can be seen from the R-D curves 120 and 122 in Fig. 2, low bit rate encoding using the YCoCg representation performs significantly better than that using the corresponding RGB representation. On the other hand, RGB-based encoding leads to an increasingly better performance when moving towards higher bit rates with more and more noise components getting encoded. As a consequence, there is a crossover region 123 indicating a sub-optimal R-D performance of both alternative representations since in either case, for encoding the sample in a single color-space-representation one can only move along one or the other R-D curve. Using an inventive decoder 100 and a corresponding inventive encoder, the present inventive concept solves this problem and is achieving a coding performance corresponding to curve 124, which is the R-D envelope of both the RGB-based and YCoCg-based R-D curves.

Moreover, in many coding applications neither the specific coding conditions nor the typical characteristics of the source are known beforehand. Using the inventive decoder and corresponding inventive encoders, the optimum color-space-representation can be adaptively chosen to be optimum in a rate-distortion sense.

Fig. 3 gives an example for a conversion of a nearly gray signal from the RGB-color-space to the YCoCg-color- space to further explain the inventive concept and the mechanisms leading to a potential decrease in bit rate. The color transform from the RGB to the YCoCg color-space-representation can be performed in a reversible way by applying the following operations to each triple of (R, G, B) or (Y,Co,Cg) values, respectively:

$$
\begin{array}{ll}
Co = R - B & t = Y - (Cg \gg 1) \\
t = B + (Co \gg 1) & G = Cg + t \\
Cg = G - t & B = t - (Co \gg 1) \\
Y = t + (Cg \gg 1) & R = B + Co
\end{array}
\quad \Leftrightarrow \quad .
$$

In the above notation, the operator (») means bitwise movement of the underlying bit-string to the right and is thus equivalent to a division by 2.

It may again be noted that the inventive idea does not depend on the exact choice of the color-space-representations to switch between. In the given examples, the restriction to the cited color-space-representations is mainly because of the fact that they are widely used.

Fig. 3 shows a graphical representation of a color-space transformation from the RGB color-space to the YCoCg color-space. The original RGB-signal 140 exemplarily has nearly equally valued R, G and B parameters, i.e. the corresponding pixel is nearly gray with an intensity proportional or depending on the sum of the RGB values. Since the pixel in question is nearly colorless, a transformation to the YCoCg color-space does provide parameter values that are close to zero for the chroma parameters Co and Cg, resembling the fact that the signal is nearly colorless. On the other hand, the luma parameter Y is having a rather big value compared to the chroma parameters.

The example shown in Fig. 3 shows a content that is predominantly less color saturated in which the usage of a decorrelating color transform from RGB to, for example, YCoCg may be very helpful in terms of overall coding efficiency since in that case the corresponding tristimulus values (values of the single information channels within one color-space-representation) are closer to being equal to one another. If within one picture, the color saturation is rather low, the individual RGB values might differ to some extend. The sum, i.e. the Y-parameter of the YCoCg-representation may then be varying smoothly over the image, and, due to the low color saturation, the Co and Cg parameters are rather small. Such smoothly or nearly constant parameters can be encoded more efficiently.

Such, the effectiveness of a color transform may be highly dependent on the specific coding conditions. This is especially true for sources that contain a high amount of signal-independent, uncorrelated noise in the primary channels. The color transform from RGB to YCoCg, when written in a matrix form, has matrix elements off the diagonal that are rather significant in value. The "amplification" of the Y-channel above a quantization threshold 152, which is shown for illustrative purposes only, is directly connected to these off-diagonal elements. Therefore, for the sources containing a high amount of signal-independent, uncorrelated noise, the significant off-diagonal elements of a decorrelating color transform may cause a severe amplification of the noise, which in turn results in a degradation of coding efficiency in the high bit-rate range where the noise components typically are supposed to survive the quantization process.

As mentioned before, with respect to Figs. 2 and 3, it can be extremely beneficial to adapt the color representation to the characteristics of the given prediction residual signal on a macro-block by macro-block (picture-block by picture-block) basis. Therefore, within a bit stream comprising the prediction residual signals, a new syntax element could be introduced in the bit stream. That syntax element could for example, when being equal to one, indicate encoding and decoding of the given macro-block involving the application of the color-space transformation by invoking the corresponding forward and inverse transform operations shown before. That introduced flag could, when being equal to zero or not present, further mean that the encoding and decoding process proceeds in the same way as already specified before, i.e. based on the original color space that existed before encoding.

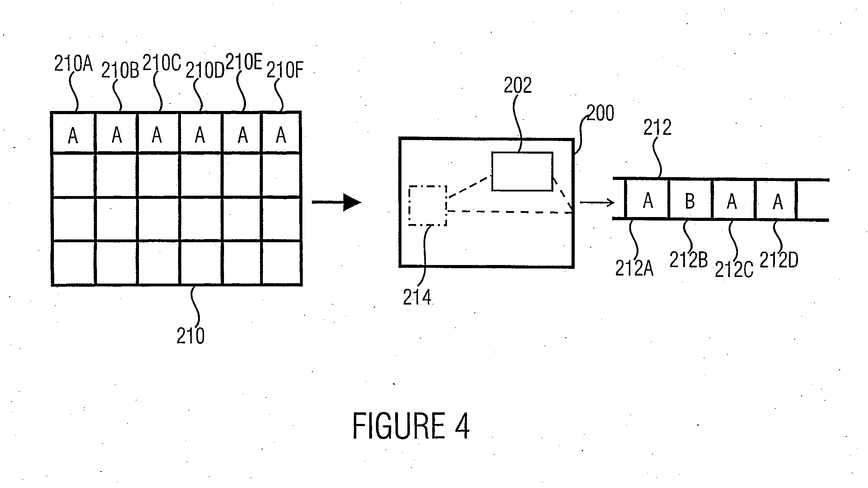

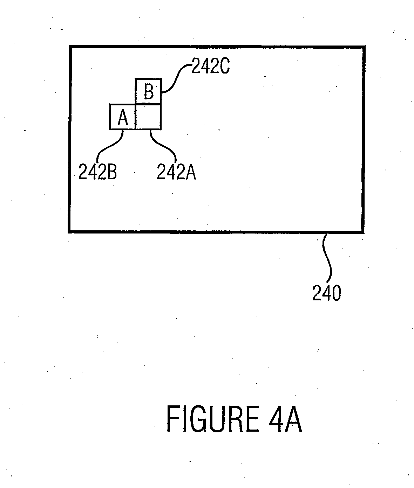

Fig. 4 shows an inventive encoder 200 for generating a representation of a picture having multiple picture blocks that are carrying picture information for picture areas that are smaller than the area of the full picture 200. The encoder 200 has a color-space transformer 202 for transforming the picture information of picture blocks from a first color-space representation (A) to a second color-space representation (B).

Encoding the picture on a picture-block basis, the individual picture-blocks 210A to 210F are input into the inventive encoder 200. The encoder outputs encoded picture blocks either in a first color-space representation (A) or in a second color-space representation (B).

The encoder 200 may further comprise a transformation decider 214 that decides on a picture-block by picture-block basis, whether the transformation for the processed picture-block shall be performed. The transformation decider 214 can, for example, meet the transformation decision based on a maximum allowable bit rate, choosing the color-space representation providing the best possible quality at the given bit rate.

Another possibility would be to define a desired maximum quality (closely connected to the coarseness of quantization), i.e. a desired distortion value, and the transformation decider 214 is working on a try and error basis, where the individual picture-blocks are generally encoded in both color-space representations and the transformation decider 214 is choosing the color-space transformation resulting in the lower bit rate. Of course, every other decision rule may be used by the transformation decider, for example, based on analytical expressions or estimations based on previously tabulated sample configurations. The inventive encoder 200 may furthermore be operative to incorporate transformation information indicating a desired transformation for a given picture block to the bit stream also having the information on the picture blocks. This signals to a corresponding decoder, whether a color-space transformation is to be performed on the decoder side or not.

When introducing such an additional flag as proposed before to signal whether the color-space transformation is to be performed for a macro-block in question or not, further bit rate can be saved by entropy encoding this introduced flag, for example called mb_rct_flag ("macroblock residual color transform flag"). To achieve an efficient coding, an arithmetic coding concept can, for example, be applied to code the binary data. Therefore, the chosen arithmetic coding could be a binary arithmetic coding concept, relying on the probability of occurrence of values 0 or 1 per bit (or per mb_rct_flag concerning a specific macro-block). Furthermore, it would, for example, be advantageous to implement the binary arithmetic coding in an adaptive manner, i.e. in a way that the underlying probability distribution of the arithmetic coding algorithm is "learning" or updated in dependence on the actual occurance of mb_rct_flag's already having been encoded. That is, that the probabilities of the occurrence of the single bit values are updated once a real value is observed and thus the underlying probability distribution is adapted to the actual.

Furthermore, the adaptive binary arithmetic coding can also be implemented in a context sensitive manner, i.e. different probability distributions are at hand for different defined contexts. In other words, more than one context could be spent for mb_rct_flag. One example of a context description is shown in Fig. 4a where, within a picture 240, three macro-blocks 242a, 242b and 242c are shown. If, for example, macro-block 242a is to be encoded, the context, i.e. the environment condition of the macro-block to be coded, could be derived by the neighboring left (a) macro-block 242b and by the neighboring upper (b) macro-block 242c. Based on the mb_rct_flag's of these macro-blocks, 3 different contexts ctxIdxInc can be berived by the following expression:

$$\texttt{ctxIdxInc( C ) = (mb\_rct\_flag ( A ) ==0) : 0 ? 1 +}$$
$$\texttt{(mb\_rct\_flag ( B ) ==0) ? 0 : 1.}$$

According to an alternative notation, this could be written as:

$$\texttt{ctxIdxInc( C ) = mb\_rct\_flag (A) + mb\_rct\_flag ( B ).}$$

It should be noted that, as already mentioned above, the mb_rct_flags do not necessarily have to be present for each individual macro-block. It is to be supposed that the flag is equal to 0 when not present for the evaluation of the above formula.

One may, for example, further foresee an additional functionality, which is also signaled by a flag "rct_mode_flag". This flag can switch the color-space-transformation on and off for a greater sample of macro-blocks that are forming , for example, a slice of macro-blocks that shares together some other distinct properties. Only if rct_mode_flag is equal to 1, mb_rct_flag's shall be present in the macro-block layer.

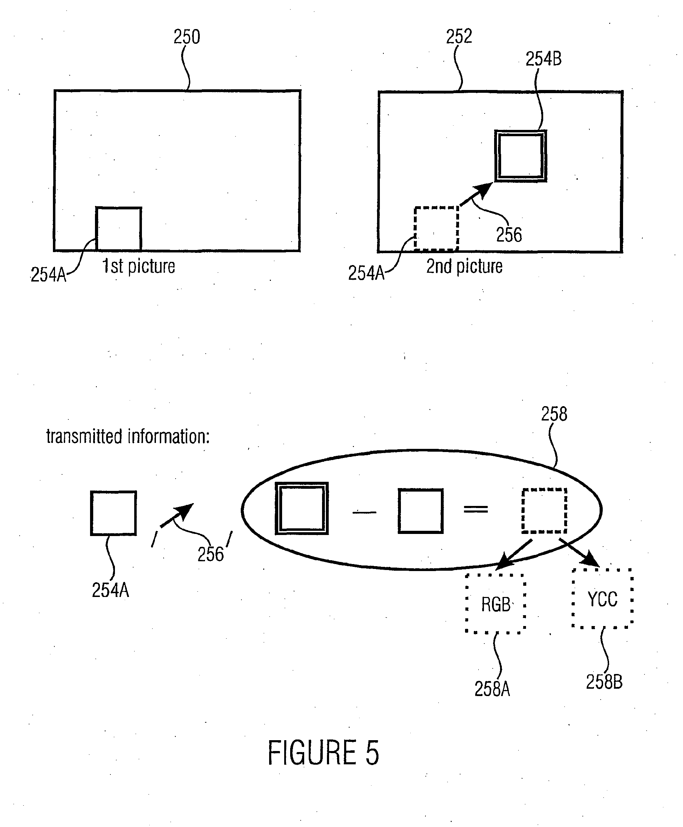

Fig. 5 illustrates, for a simplified example, the encoding process using motion estimation and predictive residual coding. The encoding shall be shortly explained on a basis of two consecutive pictures 250 and 252. Motion estimation is presented with the help of a sample macro-block 254A in picture 252.

The picture content of the macro-block 254A is also found during a motion estimation step in the picture 252, called reference picture. In the reference picture the corresponding macro-block 254B is displaced by a motion vector 256 from its position 254A in picture 252. In case the macro-block 254B has not changed its content at all, a straightforward way for deriving the picture portion of picture 252 that corresponds to the position of the macro-block 254B would be to simply transmit the motion vector 256 within a bit stream. This enables a decoder to reconstruct picture-block 254B at the appropriate position, when the decoder has knowledge of the preceding picture 250.

In a more general scenario, the picture content of the macro-block 254B will have changed with respect to the picture content of the corresponding area 254A in the reference picture 250. In predictive coding, only the difference of the prediction 254A to the actual content 254B is transmitted, since the residual samples are expected to be small and therefore can be coded using low bit rate. Thus, in addition to the macro-block 250A and the motion vector 256 the residual signal 258 has to be computed and used for a representation of the finally transmitted signal. According to the present invention, the finally transmitted signal can either be transmitted in a first color-space representation 258A or in a second color-space representation 258B depending on the bit rate or bandwidth of a transmission channel available.

It is noted here that having a single motion vector for all three signal components (e.g. R, G and B), i.e. the reference information is derived from the same block of the same reference picture, is the simplest possible case. In a more general approach, different motion vectors for each signal component can be derived, i.e. the reference information is derived from different picture blocks, that can additionally originate from different reference pictures. The present invention is thus not necessarily restricted to the case of having one motion vector, i.e., the same prediction operator for all three components. It is for example a preferred embodiment of the present invention to have one single motion vector.

As already mentioned above, the application in a macro-block based coding scheme using predictive residual coding is a preferred application scenario, since then the required bit rate can advantageously be further decreased by simple and computationally cheap color-space transformations.

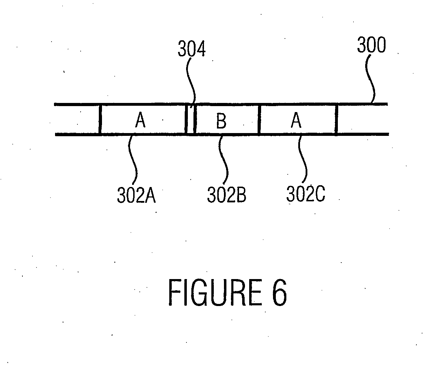

Fig. 6 shows a bit stream 300 having multiple bit stream representations of picture-blocks 302A to 302C that can be provided in a first color-space representation (A) or in a second color-space representation (B). The inventive bit stream can be used by an inventive decoder allowing for a highly compressed transmission of a compressed picture or a compressed picture sequence by a transmission channel, that may be wired, wireless, or the like. Of course the storage of an inventive bit stream on a computer-readable storage medium is also possible, having the advantage of requiring only little storage space. The bit stream may further comprise indication information 304 indicating the desired color-space-transformation of picture-block 302B.

Although the previously described embodiments of the present invention have been described mainly using the RGB and YCoCg-spaces, the present invention is not at all limited to the use of those color-spaces. In a further embodiment, arbitrary other color-spaces or other means of decorrelating inter-color techniques may be used and it is even possible to provide an inventive encoder or decoder capable of transforming between three or more different color-space representations.

Although the present invention has been mainly described with respect to video coding, it may also advantageously be used for coding of still images. Furthermore, the number of samples may be varied.

Depending on certain implementation requirements of the inventive methods, the inventive methods can be implemented in hardware or in software. The implementation can be performed using a digital storage medium, in particular a disk, DVD or a CD having electronically readable control signals stored thereon, which cooperate with a programmable computer system such that the inventive methods are performed. Generally, the present invention is, therefore, a computer program product with a program code stored on a machine-readable carrier, the program code being operative for performing the inventive methods when the computer program product runs on a computer. In other words, the inventive methods are, therefore, a computer program having a program code for performing at least one of the inventive methods when the computer program runs on a computer.

**Claims**

1. Hybrid video decoder (100) for reconstructing a picture represented in a representation having a first (104A) and a second picture block (104B) that are encoded in a predictive coding scheme, the picture blocks carrying picture information for picture areas smaller than the area of the picture, wherein the first picture block (104A) is carrying the picture information in a first color-space representation of a prediction residual and the second picture block (104B) is carrying the picture information in a second color-space representation of the prediction residual, the decoder comprising:

   an entropy decoder for deriving a quantized representation of the picture information from an entropy encoded representation of the quantized representation of the picture information using a decoding rule;
   a requantizer for deriving the picture information describing the prediction residual of the first (104A) and the second picture block (104B) from a quantized representation of the picture information; and
   a color-space transformer (102),
   **characterized in that** the color-space transformer (102) is configured to transform either the color-space representation of the first picture block (104A) to the second color-space representation or the color-space representation of the second picture block (104B) to the first color-space representation.

2. Decoder (100) in accordance with claim 1, in which the color-space transformer (102) is further operative to process transformation indication information indicating a desired transformation for a picture block; and in which the decoder (100) is further having a flag receiver (108) for receiving the transformation indication information.

3. Decoder (100) in accordance with claim 1 or 2, in which the color-space transformer (102) is operative to process the RGB-color-space and a second color-space representation comprising one luma-parameter indicating a brightness and two chroma parameters indicating a chromatic composition of a signal.

4. Decoder (100) in accordance with claim 3, in which the color-space transformer (102) is operative to perform the color-space transformation between the RGB-color-space described by parameters R, G, and B and the second color-space representation described by the luma parameter Y and the chroma parameters Cg and Co according to the following formulas:

$$
\begin{aligned}
Co &= R - B \\
t &= B + (Co >> 1) \\
Cg &= G - t \\
Y &= t + (Cg >> 1)
\end{aligned}
\quad \Leftrightarrow \quad
\begin{aligned}
t &= Y - (Cg >> 1) \\
G &= Cg + t \\
B &= t - (Co >> 1) \\
R &= B + Co
\end{aligned}
\; .
$$

5. Decoder (100) in accordance with any of the previous claims, in which the color-space transformer (102) is operative to perform the transformation based on a parametric representation of the picture information within the picture blocks, the parametric representation describing the picture information in a transform domain.

6. Decoder (100) in accordance with claim 5, in which the color-space transformer (102) is operative to perform the transformation based on a parameter representation describing the picture information in a frequency domain.

7. Decoder (100) in accordance with any of the previous claims, in which the entropy decoder is operative to use an entropy decoding rule comprising the use of a Variable-length-codebook.

8. Decoder (100) in accordance with any of the previous claims, in which the entropy decoder is operative to use a entropy decoding rule comprising the use of a binary arithmetic coding algorithm.

9. Decoder (100) in accordance with any of the previous claims, in which the entropy decoder is operative to use a decoding rule having one or more sub-rules chosen depending on a decoding context.

10. Decoder (100) in accordance with any of the previous claims, in which the decoder is operative to reconstruct the picture using information from reference pictures of a picture stream, which are temporarily preceding or following the picture within the picture stream and that are represented using related picture blocks corresponding to the picture blocks of the picture, the related picture blocks having picture information on the same picture content as the picture blocks (104A, 104B), wherein a positional change between the picture blocks and the corresponding picture blocks of the reference pictures with respect to a fixed location of the given picture blocks can be described by motion vectors.

11. Decoder (100) in accordance with claim 10, in which the decoder is operative to reconstruct the picture blocks (104A, 104B) using the corresponding picture blocks and differential picture blocks predicting a change in picture information of the picture blocks with respect to the corresponding picture blocks.

12. Decoder (100) in accordance with claims 10 and 11, further comprising an input interface for receiving a bit stream representation of the picture stream having the information of the single pictures of the picture stream.

13. Decoder in accordance with any of the previous claims, further having a picture composer for reconstructing the picture using the first (104A) and the second picture block (104B).

14. Decoder (100) in accordance with any of the previous claims, in which the color-space transformer (102) is further operative to process bypass information indicating a sequence of picture blocks and to switch off color-space transformation for the sequence of picture blocks indicated by the bypass information.

15. Hybrid video encoder (200) for generating a representation of a picture (212) having picture blocks (212A, 212B) that are encoded in a predictive coding scheme, the picture blocks carrying picture information for picture areas smaller than the area of the picture (210) in a first color-space representation of a prediction residual, the encoder (200) comprising:

a color-space-transformation decider (214) adapted to decide whether a color-space transformation for the picture blocks is to be performed or not;
a color-space transformer (202) for, depending on the decision, transforming the picture information of the prediction residual of the picture blocks (212A, 212B) to a second color-space representation and incorporating the picture information of the picture blocks into the representation in the second color-space representation or the first color-space representation;
a quantizer for deriving a quantized representation of the representation of the picture blocks; and
an entropy encoder for deriving an entropy encoded representation of the quantized representation of the picture blocks using an encoding rule
**characterized in that** the color-space-transformation decider (214) is adapted to decide whether the transformation for the picture blocks is to be performed or not on a picture-block by picture-block basis using a decision rule that is selecting picture blocks in a rate-distortion optimal way, and to generate transformation information indicating the selected picture blocks to be transformed, wherein the color-space transformer (202) is configured to transform the picture information of the selected picture blocks (212A, 212B) to the second color-space representation and incorporate the picture information of the selected picture blocks into the representation in the second color-space representation and the picture information of the other picture blocks into the representation in the first color-space representation.

16. Encoder (200) in accordance with claim 15, in which the color-space-transformation decider (214) is operative to use a decision rule that is selecting the picture block requiring less information units when transformed to the second color-space representation.

**17.** Encoder (200) in accordance with claim 15 or 16, further comprising an output interface for outputting a bit stream (300) having the picture information including the information of the first (214A) and the second picture block (212B).

**18.** Method of hybrid video decoding a picture represented in a representation having a first (104A) and a second (104B) picture block that are encoded in a predictive coding scheme, the picture blocks carrying picture information for picture areas smaller than the area of the picture, wherein the first picture block (104A) is carrying the picture information in a first color-space representation of a prediction residual and the second picture block (104B) is carrying the picture information in a second color-space representation of the prediction residual, the method comprising:

deriving a quantized representation of the picture information from an entropy encoded representation of the quantized representation of the picture information using a decoding rule; and

deriving the picture information describing the prediction residual of the first (104A) and the second picture block (104B) from a quantized representation of the picture information;

**characterized in that** the method further comprises

transforming either the color-space representation of the first picture block (104A) to the second color-space representation or the color-space representation of the second picture block (104B) to the first color-space representation.

**19.** Method of generating, using hybrid video coding, a representation of a picture having picture blocks (212A, 212B) that are encoded in a predictive coding scheme, the picture blocks carrying picture information for picture areas smaller than the area of the picture in a first color-space representation of a prediction residual, the method comprising:

deciding whether a color-space transformation for the picture blocks is to be performed or not;

transforming, depending on the decision, the picture information of the prediction residual of the picture blocks (212B) to a second color-space representation;

incorporating, depending on the decision, the picture information of the picture blocks into the representation in the second color-space representation or the first color-space representation;

deriving a quantized representation of the representation of the picture blocks; and

deriving an entropy encoded representation of the quantized representation of the picture blocks using an encoding rule;

**characterized in that** the decision whether the color-space transformation for the picture blocks is to be performed or not is performed on a picture-block by picture-block basis using a decision rule that is selecting picture blocks in a rate-distortion optimal way, with generating transformation information indicating the selected picture blocks to be transformed, wherein the transforming is performed such that the picture information of the selected picture blocks (212A, 212B) is transformed to the second color-space representation, and the incorporating is performed such that the picture information of the selected picture blocks is incorporated into the representation in the second color-space representation and the picture information of the other picture blocks is incorporated into the representation in the first color-space representation.

**20.** Computer program for performing, when running on a computer, any of the methods of method claims 18 or 19.

**Patentansprüche**

**1.** Hybridvideodecodierer (100) zum Rekonstruieren eines Bilds, das in einer Darstellung mit einem ersten (1 04A) und einem zweiten Bildblock (104B) dargestellt ist, die in einem prädiktiven Codierungsschema codiert sind, wobei die Bildblöcke Bildinformationen für Bildbereiche, die kleiner sind als der Bereich des Bilds, tragen, wobei der erste Bildblock (104A) die Bildinformationen in einer ersten Farbraumdarstellung eines Prädiktionsrests trägt und der zweite Bildblock (104B) die Bildinformationen in einer zweiten Farbraumdarstellung des Prädiktionsrests trägt, wobei der Decodierer folgende Merkmale aufweist:

einen Entropiedecodierer zum Herleiten einer quantisierten Darstellung der Bildinformationen aus einer entropiecodierten Darstellung der quantisierten Darstellung der Bildinformationen unter Verwendung einer Decodierungsregel;

einen Requantisierer zum Herleiten der Bildinformationen, die den Prädiktionsrest des ersten (104A) und des zweiten Bildblocks (104B) beschreiben, aus einer quantisierten Darstellung der Bildinformationen; und einen Farbraumwandler (102),

**dadurch gekennzeichnet, dass** der Farbraumwandler (102) konfiguriert ist, um entweder die Farbraumdarstellung des ersten Bildblocks (104A) in die zweite Farbraumdarstellung oder die Farbraumdarstellung des zweiten Bildblocks (104B) in die erste Farbraumdarstellung zu wandeln.

2. Decodierer (100) gemäß Anspruch 1, bei dem der Farbraumwandler (102) ferner wirksam ist, um Wandlungsanzeigeinformationen, die eine erwünschte Wandlung für einen Bildblock anzeigen, zu verarbeiten; und wobei der Decodierer (100) ferner einen Flag-Empfänger (108) zum Empfangen der Wandlungsanzeigeinformationen aufweist.

3. Decodierer (100) gemäß Anspruch 1 oder 2, bei dem der Farbraumwandler (102) wirksam ist, um den RGB-Farbraum und eine zweite Farbraumdarstellung, die einen Luma-Parameter, der eine Helligkeit anzeigt, und zwei Chroma-Parameter aufweist, die eine chromatische Zusammensetzung eines Signals anzeigen, zu verarbeiten.

4. Decodierer (100) gemäß Anspruch 3, bei dem der Farbraumwandler (102) wirksam ist, um die Farbraumwandlung zwischen dem RGB-Farbraum, der durch Parameter R, G und B beschrieben ist, und der zweiten Farbraumdarstellung, die durch den Luma-Parameter Y und die Chroma-Parameter Cg und Co beschrieben ist, gemäß folgenden Formeln durchzuführen:

$$
\begin{aligned}
Co &= R - B \\
t &= B + (Co >> 1) \\
Cg &= G - t \\
Y &= t + (Cg >> 1)
\end{aligned}
\qquad \Leftrightarrow \qquad
\begin{aligned}
t &= Y - (Cg >> 1) \\
G &= Cg + t \\
B &= t - (Co >> 1) \\
R &= B + Co
\end{aligned}
$$

5. Decodierer (100) gemäß einem der vorherigen Ansprüche, bei dem der Farbraumwandler (102) wirksam ist, um die Wandlung basierend auf einer parametrischen Darstellung der Bildinformationen innerhalb der Bildblöcke durchzuführen, wobei die parametrische Darstellung die Bildinformationen in einem Wandlungsbereich beschreibt.

6. Decodierer (100) gemäß Anspruch 5, bei dem der Farbraumwandler (102) wirksam ist, um die Wandlung basierend auf einer Parameterdarstellung, die die Bildinformationen in einem Frequenzbereich beschreibt, durchzuführen.

7. Decodierer (100) gemäß einem der vorherigen Ansprüche, bei dem der Entropiedecodierer wirksam ist, um eine Entropiedecodierungsregel, die die Verwendung eines Codebuchs mit variabler Länge aufweist, zu verwenden.

8. Decodierer (100) gemäß einem der vorherigen Ansprüche, bei dem der Entropiedecodierer wirksam ist, um eine Entropiedecodierungsregel, die die Verwendung eines binären arithmetischen Codierungsalgorithmus aufweist, zu verwenden.

9. Decodierer (100) gemäß einem der vorherigen Ansprüche, bei dem der Entropiedecodierer wirksam ist, um eine Decodierungsregel mit einer oder mehreren Unterregeln, die in Abhängigkeit von einem Decodierungskontext ausgewählt werden, zu verwenden.

10. Decodierer (100) gemäß einem der vorherigen Ansprüche, wobei der Decodierer wirksam ist, um das Bild unter Verwendung von Informationen aus Referenzbildern eines Bildstroms zu rekonstruieren, die dem Bild innerhalb des Bildstroms zeitweilig vorhergehen oder diesem folgen, und die unter Verwendung verwandter Bildblöcke, die den Bildblöcken des Bilds entsprechen, dargestellt sind, wobei die verwandten Bildblöcke Bildinformationen über den gleichen Bildinhalt wie die Bildblöcke (104A, 104B) aufweisen, wobei eine Positionsveränderung zwischen den Bildblöcken und den entsprechenden Bildblöcken der Referenzbilder in Bezug auf einen festen Ort der gegebenen Bildblöcke durch Bewegungsvektoren beschrieben werden kann.

11. Decodierer (100) gemäß Anspruch 10, wobei der Decodierer wirksam ist, um die Bildblöcke (104A, 104B) unter Verwendung der entsprechenden Bildblöcke und differentieller Bildblöcke, die eine Veränderung an Bildinformationen der Bildblöcke in Bezug auf die entsprechenden Bildblöcke vorhersagen, zu rekonstruieren.

12. Decodierer (100) gemäß den Ansprüchen 10 und 11, der ferner eine Eingangsschnittstelle zum Empfangen einer Bitstromdarstellung des Bildstroms mit den Informationen der einzelnen Bilder des Bildstroms aufweist.

13. Decodierer gemäß einem der vorherigen Ansprüche, der ferner einen Bildzusammemsteller zum Rekonstruieren des Bilds unter Verwendung des ersten (104A) und des zweiten Bildblocks (104B) aufweist.

14. Decodierer (100) gemäß einem der vorherigen Ansprüche, bei dem der Farbraumwandler (102) ferner wirksam ist, um Umgehungsinformationen, die eine Folge von Bildblöcken anzeigen, zu verarbeiten und eine Farbraumwandlung für die Sequenz von Bildblöcken, die durch die Umgehungsinformationen angezeigt werden, abzuschalten.

15. Hybridvideocodierer (200) zum Erzeugen einer Darstellung eines Bilds (212) mit Bildblöcken (212A, 212B), die in einem prädiktiven Codierungsschema codiert sind, wobei die Bildblöcke Bildinformationen für Bildbereiche, die kleiner sind als der Bereich des Bilds (210), in einer ersten Farbraumdarstellung eines Prädiktionsrests, tragen, wobei der Codierer (200) folgende Merkmale aufweist:

   einen Farbraumwandlungsentscheider (214), der angepasst ist, um zu entscheiden, ob eine Farbraumwandlung für die Bildblöcke durchgeführt werden soll oder nicht;
   einen Farbraumwandler (202) zum, in Abhängigkeit von der Entscheidung, Wandeln der Bildinformationen des Prädiktionsrests der Bildblöcke (212A, 212B) in eine zweite Farbraumdarstellung und Eingliedern der Bildinformationen der Bildblöcke in die Darstellung in der zweiten Farbraumdarstellung oder der ersten Farbraumdarstellung;
   einen Quantisierer zum Herleiten einer quantisierten Darstellung der Darstellung der Bildblöcke; und
   einen Entropiecodierer zum Herleiten einer entropiecodierten Darstellung der quantisierten Darstellung der Bildblöcke unter Verwendung einer Codierungsregel,
   **dadurch gekennzeichnet, dass** der Farbraumwandlungsentscheider (214) angepasst ist, um auf einer Basis von Bildblock für Bildblock unter Verwendung einer Entscheidungsregel, die Bildblöcke in einer ratenverzerrungsoptimalen Weise auswählt, zu entscheiden, ob die Wandlung für die Bildblöcke durchgeführt werden soll oder nicht, und um Wandlungsinformationen zu erzeugen, die die ausgewählten Bildblöcke, die gewandelt werden sollen, anzeigen, wobei der Farbraumwandler (202) konfiguriert ist, um die Bildinformationen der ausgewählten Bildblöcke (212A, 212B) in die zweite Farbraumdarstellung zu wandeln und die Bildinformationen der ausgewählten Bildblöcke in die Darstellung in der zweiten Farbraumdarstellung und die Bildinformationen der anderen Bildblöcke in die Darstellung in der ersten Farbraumdarstellung einzugliedern.

16. Codierer (200) gemäß Anspruch 15, bei dem der Farbraumwandlungsentscheider (214) wirksam ist, um eine Entscheidungsregel zu verwenden, die den Bildblock auswählt, der weniger Informationseinheiten erfordert, wenn er in die zweite Farbraumdarstellung gewandelt wird.

17. Codierer (200) gemäß Anspruch 15 oder 16, der ferner eine Ausgangsschnittstelle zum Ausgeben eines Bitstroms (300) mit den Bildinformationen, die die Informationen des ersten (214A) und des zweiten Bildblocks (212B) umfassen, aufweist.

18. Verfahren zum Hybridvideodecodieren eines Bilds, das in einer Darstellung mit einem ersten (104A) und einem zweiten (104B) Bildblock, die in einem prädiktiven Codierungsschema codiert sind, dargestellt ist, wobei die Bildblöcke Bildinformationen für Bildbereiche, die kleiner sind als der Bereich des Bilds, tragen, wobei der erste Bildblock (104A) die Bildinformationen in einer ersten Farbraumdarstellung eines Prädiktionsrests trägt und der zweite Bildblock (104B) die Bildinformationen in einer zweiten Farbraumdarstellung des Prädiktionsrests trägt, wobei das Verfahren folgende Schritte aufweist:

   Herleiten einer quantisierten Darstellung der Bildinformationen aus einer entropiecodierten Darstellung der quantisierten Darstellung der Bildinformationen unter Verwendung einer Decodierungsregel; und
   Herleiten der Bildinformationen, die den Prädiktionsrest des ersten (104A) und des zweiten Bildblocks (104B) beschreiben, aus einer quantisierten Darstellung der Bildinformationen;
   **dadurch gekennzeichnet, dass** das Verfahren ferner folgenden Schritt aufweist:

   Wandeln von entweder der Farbraumdarstellung des ersten Bildblocks (104A) in die zweite Farbraumdarstellung oder der Farbraumdarstellung des zweiten Bildblocks (104B) in die erste Farbraumdarstellung.

**19.** Verfahren zum Erzeugen, unter Verwendung einer Hybridvideocodierung, einer Darstellung eines Bilds mit Bildblöcken (212A, 212B), die in einem prädiktiven Codierungsschema codiert sind, wobei die Bildblöcke Bildinformationen für Bildbereiche, die kleiner sind als der Bereich des Bilds, in einer ersten Farbraumdarstellung eines Prädiktionsrests, tragen, wobei das Verfahren folgende Schritte aufweist:

Entscheiden, ob eine Farbraumwandlung für die Bildblöcke durchgeführt werden soll oder nicht;
Wandeln, in Abhängigkeit von der Entscheidung, der Bildinformationen des Prädiktionsrests der Bildblöcke (212B) in eine zweite Farbraumdarstellung;
Eingliedern, in Abhängigkeit von der Entscheidung, der Bildinformationen der Bildblöcke in die Darstellung in der zweiten Farbraumdarstellung oder der ersten Farbraumdarstellung;
Herleiten einer quantisierten Darstellung der Darstellung der Bildblöcke; und
Herleiten einer entropiecodierten Darstellung der quantisierten Darstellung der Bildblöcke unter Verwendung einer Codierungsregel,
**dadurch gekennzeichnet, dass** die Entscheidung, ob die Farbraumwandlung für die Bildblöcke durchgeführt werden soll oder nicht, auf einer Basis von Bildblock für Bildblock unter Verwendung einer Entscheidungsregel durchgeführt wird, die Bildblöcke in einer ratenverzerrungsoptimalen Weise auswählt, mit einem Erzeugen von Wandlungsinformationen, die die ausgewählten Bildblöcke, die gewandelt werden sollen, anzeigen, wobei das Wandeln derart durchgeführt wird, dass die Bildinformationen der ausgewählten Bildblöcke (212A, 212B) in die zweite Farbraumdarstellung gewandelt werden, und das Eingliedern derart durchgeführt wird, dass die Bildinformationen der ausgewählten Bildblöcke in die Darstellung in der zweiten Farbraumdarstellung eingegliedert werden und die Bildinformationen der anderen Bildblöcke in die Darstellung in der ersten Farbraumdarstellung eingegliedert werden.

**20.** Computerprogramm zum Durchführen eines der Verfahren der Verfahrensansprüche 18 oder 19, wenn dieses auf einem Computer läuft.

**Revendications**

**1.** Décodeur vidéo hybride (100) pour la reconstruction d'une image représentée dans une représentation ayant un premier (104A) et
un deuxième bloc d'image (104B) qui sont codés selon un schéma de codage à prédiction, les blocs d'image portant des informations d'image pour des zones d'image plus petites que la zone d'image,
où le premier bloc d'image (104A) porte les informations d'image dans une première représentation de l'espace de couleurs d'un résiduel de prédiction et le deuxième bloc d'image (104B) porte les informations d'image dans une deuxième représentation de l'espace de couleurs du résiduel de prédiction, le décodeur comprenant :

un décodeur entropique destiné à dériver une représentation quantifiée des informations d'image d'une représentation codée de manière entropique de la représentation quantifiée des informations d'image à l'aide d'une règle de décodage ;
un requantificateur destiné à dériver les informations d'image décrivant le résiduel de prédiction du premier (104A) et du deuxième bloc d'image (104B) d'une représentation quantifiée des informations d'image ; et
un transformateur d'espace de couleurs (102),
**caractérisé par le fait que** le transformateur d'espace de couleurs (102) est configuré pour transformer soit la représentation de l'espace de couleurs du premier bloc d'image (104A) à la deuxième représentation de l'espace de couleurs, soit la représentation de l'espace de couleurs du deuxième bloc d'image (104B) à la première représentation de l'espace de couleurs.

**2.** Décodeur (100) selon la revendication 1, dans lequel le transformateur de l'espace de couleurs (102) est par ailleurs opérationnel pour traiter les informations d'indication de transformation indiquant une transformation désirée pour un bloc d'image ; et
dans lequel le décodeur (100) présente par ailleurs un récepteur de drapeau (108) destiné à recevoir les informations d'indication de transformation.

**3.** Décodeur (100) selon la revendication 1 ou 2, dans lequel le transformateur de l'espace de couleurs (102) est opérationnel pour traiter l'espace de couleurs RGB et une deuxième représentation de l'espace de couleurs comprenant un paramètre luma indiquant une luminosité et deux paramètres chroma indiquant une composition chromatique d'un signal.

**4.** Décodeur (100) selon la revendication 3, dans lequel le transformateur de l'espace de couleurs (102) est opérationnel pour réaliser la transformation de l'espace de couleurs entre l'espace de couleurs RGB décrit par les paramètres R, G, et B et la deuxième représentation de l'espace de couleurs décrite par le paramètre luma Y et les paramètres chroma Cg et Co selon les formules suivantes:

$$Co = R - B \qquad\qquad t = Y - (Cg >> 1)$$
$$t = B + (Co >> 1) \qquad\qquad G = Cg + t$$
$$Cg = G - t \quad\Leftrightarrow\quad B = t - (Co >> 1)$$
$$Y = t + (Cg >> 1) \qquad\qquad R = B + Co$$

**5.** Décodeur (100) selon l'une quelconque des revendications précédentes, dans lequel le transformateur de l'espace de couleurs (102) est opérationnel pour réaliser la transformation sur base d'une représentation paramétrique des informations d'image dans les blocs d'image, la représentation paramétrique décrivant les informations d'image dans un domaine de transformée.

**6.** Décodeur (100) selon la revendication 5, dans lequel le transformateur de l'espace de couleurs (102) est opérationnel pour réaliser la transformation sur base d'une représentation paramétrique décrivant les informations d'image dans un domaine fréquentiel.

**7.** Décodeur (100) selon l'une quelconque des revendications précédentes, dans lequel le décodeur entropique est opérationnel pour utiliser une règle de décodage entropique comprenant l'utilisation d'un livre de codes de longueur variable.

**8.** Décodeur (100) selon l'une quelconque des revendications précédentes, dans lequel le décodeur entropique est opérationnel pour utiliser une règle de décodage entropique comprenant l'utilisation d'un algorithme de codage arithmétique binaire.

**9.** Décodeur (100) selon l'une quelconque des revendications précédentes, dans lequel le décodeur entropique est opérationnel pour utiliser une règle de décodage présentant une ou plusieurs sous-règles choisies en fonction du contexte de décodage.

**10.** Décodeur (100) selon l'une quelconque des revendications précédentes, dans lequel le décodeur est opérationnel pour reconstruire l'image à l'aide des informations d'image de référence d'un courant d'images qui précèdent ou suivent temporairement l'image dans le courant d'images et qui sont représentées à l'aide de blocs d'image relatifs correspondant aux blocs d'image de l'image, les blocs d'image relatifs présentant des informations d'image sur le même contenu d'image que les blocs d'image (104A, 104B), où un changement de position entre les blocs d'image et les blocs d'image correspondants des images de référence par rapport à un endroit fixe des blocs d'image donnés peut être décrit par des vecteurs de mouvement.

**11.** Décodeur (100) selon la revendication 10, dans lequel le décodeur est opérationnel pour reconstruire les blocs d'image (104A, 104B) à l'aide des blocs d'image correspondants et de blocs d'image différentiels prédisant un changement dans les informations d'image des blocs d'image par rapport au blocs d'image correspondants.

**12.** Décodeur (100) selon les revendications 10 et 11, comprenant par ailleurs une interface d'entrée destinée à recevoir une représentation de flux de bits du courant d'images présentant les informations des images individuelles du courant d'images.

**13.** Décodeur selon l'une quelconque des revendications précédentes, présentant par ailleurs un composeur d'image destiné à reconstruire l'image à l'aide du premier (104A) et du deuxième bloc d'image (104B).

**14.** Décodeur (100) selon l'une quelconque des revendications précédentes, dans lequel le transformateur d'espace de couleurs (102) est par ailleurs opérationnel pour traiter les informations de contournement indiquant une séquence de blocs d'image et pour désactiver la transformation de l'espace de couleurs pour la séquence de blocs d'image indiquée par les informations de contournement.

**15.** Codeur vidéo hybride (200) pour générer une représentation d'une image (212) présentant des blocs d'image (212A, 212B) qui sont codés selon un schéma de codage à prédiction, les blocs d'image portant des informations d'image pour les zones d'image plus petites que la zone de l'image (210) dans une première représentation de l'espace de couleurs d'un résiduel de prédiction, le codeur (200) comprenant:

un décideur de transformation de l'espace de couleurs (214) adapté pour décider si une transformation de l'espace de couleurs pour les blocs d'image doit être réalisée ou non;
un transformateur d'espace de couleurs (202) destiné à transformer, en fonction de la décision, les informations d'image du résiduel de prédiction des blocs d'image (212A, 212B) en une deuxième représentation de l'espace de couleurs et à incorporer les informations d'image des blocs d'image dans la représentation dans la deuxième représentation d'espace de couleurs ou la première représentation d'espace de couleurs;
un quantificateur destiné à dériver une représentation quantifiée de la représentation des blocs d'image; et
un codeur entropique destiné à dériver une représentation codée de manière entropique de la représentation quantifiée des blocs d'image à l'aide d'une règle de codage,
**caractérisé par le fait que** le décideur de transformation d'espace de couleurs (214) est adapté pour décider si la transformation des blocs d'image doit être réalisée ou non par bloc d'image à l'aide d'une règle de décision qui sélectionne des blocs d'image de manière optimale quant à la distorsion de taux, et pour générer les informations de transformation indiquant les blocs d'image sélectionnés à transformer, où le transformateur d'espace de couleurs (202) est configuré pour transformer les informations d'image des blocs d'image sélectionnés (212A, 212B) à la deuxième représentation d'espace de couleurs et pour incorporer les informations d'image des blocs d'image sélectionnés dans la représentation dans la deuxième représentation d'espace de couleurs et les informations d'image des autres blocs d'image dans la représentation dans la première représentation d'espace de couleurs.

**16.** Codeur (200) selon la revendication 15, dans lequel le décideur de transformation d'espace de couleurs (214) est opérationnel pour utiliser une règle de décision qui sélectionne le bloc d'image qui requiert moins d'unités d'information lorsqu'il est transformé à la deuxième représentation d'espace de couleurs.

**17.** Codeur (200) selon la revendication 15 ou 16, comprenant par ailleurs une interface de sortie destinée à sortir un flux de bits (300) présentant les informations d'image incluant les informations du premier (214A) et du deuxième bloc d'image (212B).

**18.** Procédé de décodage vidéo hybride d'une image représentée dans une représentation présentant un premier (104A) et un deuxième (104B) bloc d'image qui sont codés selon un schéma de codage à prédiction, les blocs d'image portant des informations d'image pour des zones d'image plus petites que la zone d'image, où le premier bloc d'image (104A) porte les informations d'image dans une première représentation d'espace de couleurs d'un résiduel de prédiction et le deuxième bloc d'image (104B) porte les informations d'image dans une deuxième représentation d'espace de couleurs du résiduel de prédiction, le procédé comprenant:

dériver une représentation quantifiée des informations d'image d'une représentation codée de manière entropique de la représentation quantifiée des informations d'image à l'aide d'une règle de décodage; et
dériver les informations d'image décrivant le résiduel de prédiction du premier (104A) et du deuxième bloc d'image (104B) d'une représentation quantifiée des informations d'image;
**caractérisé par le fait que** le procédé comprend ailleurs le fait de
transformer soit la représentation d'espace de couleurs du premier bloc d'image (104A) à la deuxième représentation d'espace de couleurs ou la représentation d'espace de couleurs du deuxième bloc d'image (104B) à la première représentation d'espace de couleurs.

**19.** Procédé de génération, à l'aide du codage vidéo hybride, d'une représentation d'une image présentant des blocs d'image (212A, 212B) qui sont codés selon un schéma de codage à prédiction, les blocs d'image portant les informations d'image pour les zones d'image plus petites que la zone d'image dans une première représentation d'espace de couleurs d'un résiduel de prédiction, le procédé comprenant:

décider si une transformation d'espace de couleurs pour les blocs d'image doit être réalisée ou non;
transformer, en fonction de la décision, les informations d'image du résiduel de prédiction des blocs d'image (212B) en une deuxième représentation d'espace de couleurs;
incorporer, en fonction de la décision, les informations d'image des blocs d'image dans la représentation dans la deuxième représentation d'espace de couleurs ou dans la première représentation d'espace de couleurs;

dériver une représentation quantifiée de la représentation des blocs d'image; et

dériver une représentation codée de manière entropique de la représentation quantifiée des bloc d'image à l'aide d'une règle de codage;

**caractérisé par le fait que** la décision de si la transformation d'espace de couleurs pour les blocs d'image doit être réalisée ou non est effectuée par bloc d'image à l'aide d'une règle de décision qui sélectionne les blocs d'image de manière optimale quant à la distorsion de taux, en générant les informations de transformation indiquant les blocs d'image sélectionnés à transformer, où la transformation est effectuée de sorte que les informations d'image des blocs d'image sélectionnés (212A, 212B) soient transformées à la deuxième représentation d'espace de couleurs, et l'incorporation est effectuée de sorte que les informations d'image des blocs d'image sélectionnes soient incorporées dans la représentation dans la deuxième représentation d'espace de couleurs et les informations d'image des autres blocs d'image soient incorporées dans la représentation dans la première représentation d'espace de couleurs.

20. Programme d'ordinateur pour réaliser, lorsqu'il est exécuté sur un ordinateur, l'un quelconque des procédés des revendications de procédé 18 ou 19.

FIGURE 1

Rate-distortion performance (R-D) curves for encoding a single picture in fixed colour space representations and the corresponding target R-D envelope.

FIGURE 2

FIGURE 3

FIGURE 4

242C

B

A

242B    242A

240

FIGURE 4A

FIGURE 5

FIGURE 6

10

| | | | |
|---|---|---|---|
| 12A | 12B | 12C | 12D |
| 12E | 12F | 12G | 12H |
| 12I | 12J | 12K | 12L |

12I

16

FIGURE 7

24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4974171 A